# FASCICULE DE BREVET EUROPEEN

(11) **EP 3 950 507 B1**
(45) Date de publication et mention de la délivrance du brevet: **08.11.2023**
(21) Numéro de dépôt: 21184052.5
(22) Date de dépôt: 06.07.2021
(51) Int. Cl.: B64D 27/26

(54) **PROCÉDÉ D'ASSEMBLAGE D'UN MÂT D'AÉRONEF ET MÂT D'AÉRONEF OBTENU À PARTIR DE CE PROCÉDÉ**
MONTAGEVERFAHREN FÜR EINEN FLUGZEUGMAST UND FLUGZEUGMAST ERHALTEN DURCH DIESES VERFAHREN
ASSEMBLING METHOD FOR AN AIRCRAFT PYLON AND AIRCRAFT PYLON OBTAINED BY THIS METHOD

(30) Priorité: 04.08.2020 FR 2008257
(43) Date de publication de la demande: 09.02.2022
(73) Titulaire: Airbus SAS, 31700 Blagnac (FR); Airbus Operations SAS, 31060 Toulouse (FR)
(72) Inventeur: ALBY, Sébastien, 31060 TOULOUSE (FR); GELIOT, Jean, 31060 TOULOUSE (FR); DEFORET, Thomas, 31060 TOULOUSE (FR); DUBOIS, Olivier, 31060 TOULOUSE (FR); DEDIEU, Joël, 31060 TOULOUSE (FR); BARDEY, Xavier, 31700 BLAGNAC (FR)
(74) Mandataire: Fantin, Laurent

(56) Documents cités:
- EP-A1- 3 683 149
- EP-B1- 3 683 149
- FR-A1- 3 059 648

## Description

La présente demande se rapporte à un procédé d'assemblage d'un mât d'aéronef ainsi qu'à un mât d'aéronef obtenu à partir de ce procédé.

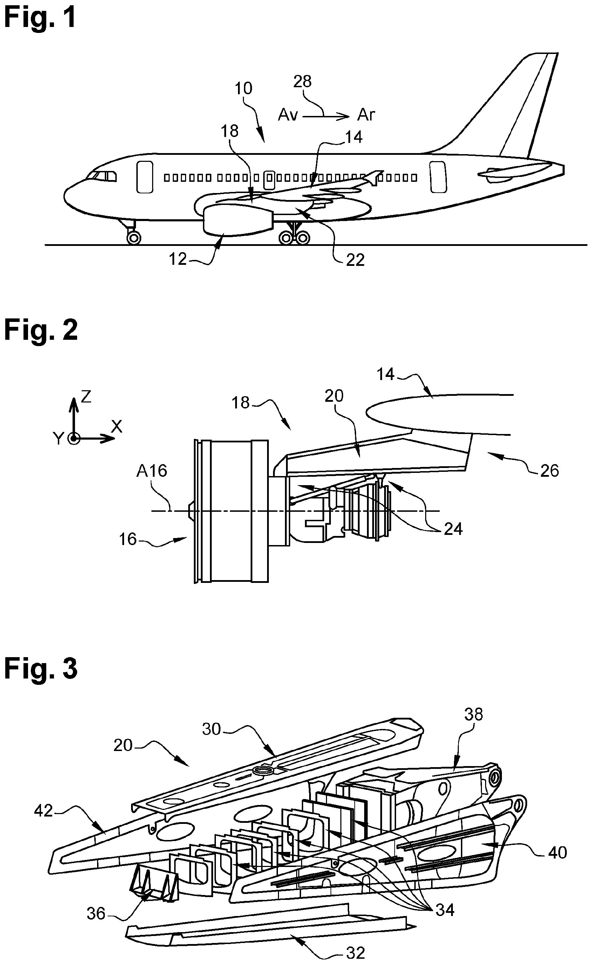

Selon une configuration visible sur les figures 1 et 2, un aéronef 10 comprend plusieurs ensembles propulseurs 12 qui sont positionnés sous la voilure 14 de l'aéronef 10.

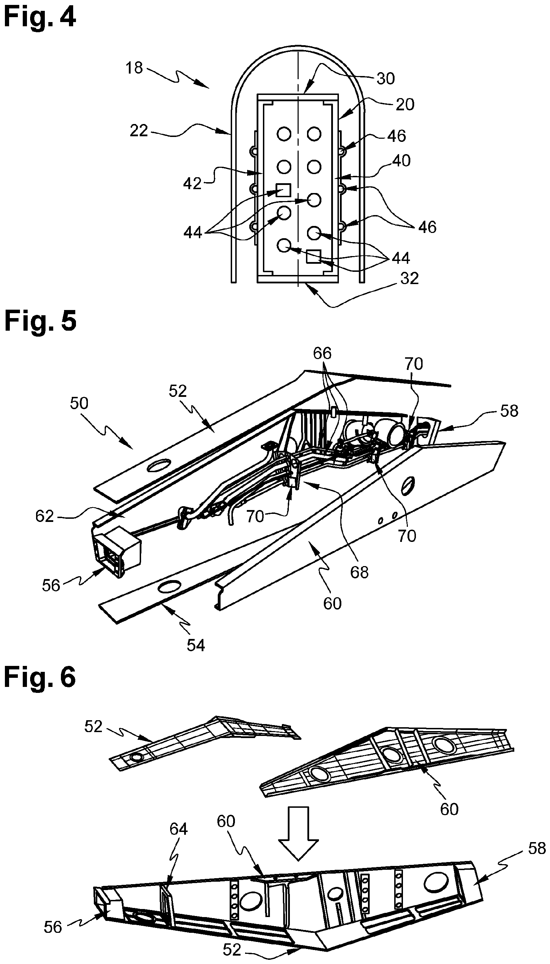

Un ensemble propulseur 12 comprend un moteur 16, une nacelle (non représentée sur la figure 2) positionnée autour du moteur 16 et un mât 18 qui assure la liaison entre le moteur 16 et la voilure 14. Le mât 18 comprend une structure primaire 20 rigide qui assure entre autres la transmission des efforts entre le moteur 16 et le reste de l'aéronef 10, ainsi qu'une structure secondaire 22 (visible sur la figure 4) qui enveloppe la structure primaire 20 et limite la traînée du mât 18. Selon une configuration, la structure primaire 20 est reliée au moteur 16 par une attache-moteur 24 et à la voilure 14 par une attache-voilure 26.

Pour la présente demande, une direction longitudinale X est une direction parallèle à l'axe moteur A16. Une direction transversale horizontale Y est une direction perpendiculaire à l'axe moteur A16 et horizontale. Une direction transversale verticale Z est une direction perpendiculaire à l'axe moteur A16 et verticale. Un plan longitudinal vertical est un plan parallèle aux directions longitudinale X et transversale verticale Z.

Les termes « avant » et « arrière » se réfèrent à une direction d'avance de l'aéronef 10 suite à la poussée exercée par les ensembles propulseurs 12, cette direction étant représentée par la flèche 28 sur la figure 1.

Comme illustré sur les figures 3 et 4, la structure primaire 20 comprend :
- un longeron supérieur 30,
- un longeron inférieur 32,
- des renforts intermédiaires 34 qui relient les longerons supérieur et inférieur 30, 32, sont disposés dans des plans transversaux et ont chacun un contour approximativement carré ou rectangulaire,
- un renfort avant 36 qui relie une extrémité avant du longeron supérieur 30 et une extrémité avant du longeron inférieur 32,
- un renfort arrière 38 qui relie une extrémité arrière du longeron supérieur 30 et une extrémité arrière du longeron inférieur 32,
- des premier et deuxième panneaux latéraux 40, 42 disposés de part et d'autre des renforts intermédiaires avant et arrière 34, 36, 38.

Comme illustré sur la figure 4, le mât 18 comprend également des systèmes internes 44 positionnés à l'intérieur de la structure primaire 20 ainsi que des systèmes externes 46 positionnés à l'extérieur de la structure primaire 20, entre cette dernière et la structure secondaire 22.

Selon un mode d'assemblage décrit par exemple dans le document FR2931133A1, les différents éléments de la structure primaire (les longerons supérieur et inférieur 30, 32, les renforts intermédiaires avant et arrière 34, 36, 38 ainsi que les premier et deuxième panneaux latéraux 40, 42) sont assemblés de manière à obtenir un caisson creux fermé sur ses faces supérieure, inférieure, latérales. Après cette étape d'assemblage, il ne subsiste que des ouvertures de taille réduite, au niveau des longerons supérieur et inférieur 30, 32 ainsi qu'au niveau des premier et deuxième panneaux latéraux 40, 42, pour accéder à l'intérieur de la structure primaire 20.

En suivant, les systèmes internes 44 sont positionnés les uns après les autres à l'intérieur de la structure primaire 20. En suivant, les systèmes externes 46 sont positionnés autour de la structure primaire 40 puis la structure secondaire 22 est mise en place.

Selon ce mode opératoire, l'accessibilité pour mettre en place les systèmes internes 44 à l'intérieur de la structure primaire 20 déjà assemblée est limitée, ce qui peut parfois rendre leur installation longue et complexe pour les opérateurs. De plus, le fait de mettre en place ces systèmes internes 44 les uns à la suite des autres dans la structure primaire 20 tend à augmenter significativement le temps d'assemblage du mât.

Le document EP3683149 décrit un procédé d'assemblage d'un mât d'aéronef comprenant une structure primaire, une structure secondaire qui enveloppe la structure primaire, des systèmes internes partiellement positionnés à l'intérieur de la structure primaire, ainsi que des systèmes externes positionnés à l'extérieur de la structure primaire, la structure primaire comportant des longerons supérieur et inférieur, des cadres transversaux reliant les longerons supérieur et inférieur ainsi que des premier et deuxième panneaux latéraux disposés de part et d'autre des cadres transversaux, le procédé d'assemblage comprenant, dans l'ordre chronologique les étapes suivantes : assemblage de la structure primaire, à l'exception d'au moins un des premier et deuxième panneaux latéraux, de manière à obtenir une structure primaire dont au moins une face latérale est dégagée, mise en place des systèmes internes à l'intérieur de la structure primaire à partir de la face latérale dégagée de la structure primaire, et fixation d'un des premier ou deuxième panneaux latéraux pour obturer chaque face latérale initialement dégagée. Les systèmes internes sont reliés à la structure primaire, ou aux systèmes externes, ou à la structure secondaire. Le document EP3683149 est silencieux concernant la fixation des systèmes internes à la structure primaire.

Le document FR3059648 décrit un procédé de fabrication d'un mât d'aéronef comprenant une structure primaire comportant une ossature comprenant un ensemble de nervures, un longeron supérieur avant, un longeron supérieur arrière, des première et deuxième plaques latérales, et une structure secondaire formant un carénage aérodynamique, le procédé comprenant les étapes suivantes : assemblage du longeron supérieur avant sur l'ossature, assemblage du longeron supérieur arrière sur l'ossature, assemblage des première et deuxième plaques latérales sur l'ossature, ajout de la structure secondaire sur la structure primaire, sous lequel sont logés des câblages et conduits. Le document FR3059648 est silencieux concernant la mise en place de systèmes internes dans la structure primaire.

La présente invention vise à remédier à tout ou partie des inconvénients de l'art antérieur. A cet effet, l'invention a pour objet un procédé d'assemblage d'un mât d'aéronef selon la revendication indépendante 1, le mât d'aéronef comprenant une structure primaire comportant des longerons supérieur et inférieur ainsi que des premier et deuxième panneaux latéraux, une structure secondaire coiffant la structure primaire, au moins un système interne positionné au moins partiellement à l'intérieur de la structure primaire ainsi qu'au moins un système externe positionné entre la structure primaire et la structure secondaire le procédé d'assemblage comprenant:
- une première étape d'assemblage d'un sous-ensemble comportant au moins un des longerons supérieur et inférieur ainsi qu'au moins un des premier et deuxième panneaux latéraux,
- une étape de montage d'un module de systèmes internes comportant au moins un système interne et au moins un support auquel est relié le système interne, le au moins un ou chaque support étant distinct de la structure primaire, le au moins un ou chaque support comprenant des première et deuxième parties jointives au niveau d'un plan de jonction, chacune des première et deuxième parties du support comprenant une plaque et une cornière positionnée au niveau d'un premier côté de la plaque,
- une deuxième étape d'assemblage du module de systèmes internes et du sous-ensemble assemblé lors de la première étape d'assemblage, et lors de la deuxième étape d'assemblage, chaque support du module de systèmes internes est relié à au moins un longeron supérieur ou inférieur et/ou au moins un premier ou deuxième panneau latéral du sous-ensemble assemblé lors de la première étape d'assemblage, et lors de la deuxième étape d'assemblage, la cornière de chacune des première et deuxième parties du support étant reliée au premier ou deuxième panneau latéral,
- une troisième étape d'assemblage du (ou des) élément(s) de la structure primaire non assemblé(s) lors de la première étape d'assemblage,
- une étape de mise en place et de fixation des systèmes externes et de la structure secondaire.

Après la première étape, la structure primaire n'est que partiellement assemblée si bien que l'intérieur de la structure primaire est largement accessible, facilitant la mise en place des systèmes internes. Selon l'invention, tous les systèmes internes sont positionnés dans la structure primaire en une seule étape ce qui contribue à réduire notablement le temps d'assemblage du mât. Les systèmes internes étant, préalablement à l'assemblage du module de systèmes internes et du sous-ensemble assemblé lors de la première étape d'assemblage, reliés à des supports, ceci permet également de réduire le temps d'assemblage du mât.

Selon une autre caractéristique, les longerons supérieur et inférieur, les premier et deuxième panneaux latéraux ainsi que les supports sont pré-percés avant d'être assemblés et, lors des première, deuxième et troisième étapes d'assemblage, les longerons supérieur et inférieur, les premier et deuxième panneaux latéraux et les supports sont positionnés les uns par rapport aux autres de manière à faire coïncider des trous pour loger des éléments de fixation puis à mettre en place les éléments de fixation.

Selon un premier mode de réalisation, le module de systèmes internes comprend plusieurs supports indépendants les uns des autres.

Selon un deuxième mode de réalisation, le module de systèmes internes comprend plusieurs supports reliés entre eux par des raidisseurs longitudinaux.

Selon une autre caractéristique, chaque support se présente sous la forme d'un cadre, le module de systèmes internes comprend plusieurs systèmes internes, et lors de l'étape de montage les systèmes internes sont reliés aux supports et/ou aux raidisseurs longitudinaux par des éléments de liaison de manière à maintenir les systèmes internes immobiles par rapport aux supports et aux raidisseurs longitudinaux.

L'invention a également pour objet un mât d'aéronef selon la revendication indépendante 6, obtenu à partir du procédé d'assemblage selon l'une des caractéristiques précédentes, le mât d'aéronef comprenant une structure primaire ainsi qu'un module de systèmes internes comportant au moins un système interne et au moins un support auquel est relié le système interne, le au moins un ou chaque support étant distinct de la structure primaire, le au moins un ou chaque support comprenant des première et deuxième parties jointives au niveau d'un plan de jonction, chacune des première et deuxième parties du support comprenant une plaque et une cornière positionnée au niveau d'un premier côté de la plaque, ledit module de systèmes internes étant positionné à l'intérieur de la structure primaire, chaque support du module de systèmes internes étant relié à la structure primaire, la cornière de chacune des première et deuxième parties du support étant reliée au premier ou deuxième panneau latéral.

D'autres caractéristiques du mât sont définies dans les revendications dépendantes 7 à 12.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue latérale d'une structure primaire d'un mât reliant un moteur à une voilure qui illustre un mode de réalisation,
- La figure 3 est une vue en perspective et en éclaté d'une structure primaire d'un mât illustrant un mode de réalisation de l'art antérieur,
- La figure 4 est une coupe transversale d'un mât d'aéronef illustrant un mode de réalisation de l'art antérieur,
- La figure 5 est une vue en perspective et en éclaté d'une structure primaire d'un mât d'aéronef illustrant un mode de réalisation de l'invention,
- La figure 6 est une vue en perspective d'une partie d'une structure primaire d'un mât illustrant une première étape d'un procédé d'assemblage d'un mât d'aéronef,
- La figure 7 est une vue en perspective d'un module de systèmes internes d'un mât d'aéronef illustrant un premier mode de réalisation de l'invention,
- La figure 8 est une vue de face d'un support d'un module de systèmes internes illustrant un mode de réalisation de l'invention,
- La figure 9 est une vue en perspective de la partie de la structure primaire visible sur la figure 6 dans laquelle est positionné le module de systèmes internes visible sur la figure 7,
- La figure 10 est une vue en perspective de la structure primaire visible sur la figure 9 à la fin de son assemblage,
- La figure 11 est une vue en perspective d'un module de systèmes internes d'un mât d'aéronef illustrant un deuxième mode de réalisation de l'invention,
- La figure 12 est une vue en perspective d'une partie d'une structure primaire d'un mât d'aéronef dans laquelle est positionné le module de systèmes internes visible sur la figure 11, et
- La figure 13 est une vue en perspective de la structure primaire visible sur la figure 12 à la fin de son assemblage.

Sur les figures 5, 10, 13, on a représenté une structure primaire 50 d'un mât d'aéronef qui comprend :
- un longeron supérieur 52,
- un longeron inférieur 54,
- un renfort avant 56 qui relie une extrémité avant du longeron supérieur 52 et une extrémité avant du longeron inférieur 54,
- un renfort arrière 58 qui relie une extrémité arrière du longeron supérieur 52 et une extrémité arrière du longeron inférieur 54,
- des premier et deuxième panneaux latéraux 60, 62 reliant les longerons supérieur et inférieur 52, 54, disposés de part et d'autre des renforts avant et arrière 56, 58.

Selon un mode de réalisation, la structure primaire 50 comprend au moins un renfort intermédiaire 64, reliant les longerons supérieur et inférieur 52, 54, sous la forme d'un cadre disposé dans un plan transversal.

Le mât d'aéronef comprend également une structure secondaire qui coiffe la structure primaire 50, espacée de cette dernière, au moins un système interne 66 positionné au moins partiellement à l'intérieur de la structure primaire 50 ainsi qu'au moins un système externe positionné à l'extérieur de la structure primaire 50, entre cette dernière et la structure secondaire.

Comme illustré sur les figures 5, 7 et 11, le mât d'aéronef comprend plusieurs systèmes internes 66 comme des canalisations, des faisceaux de câbles, un système d'extinction de feu, un système de drainage par exemple. Les systèmes internes 66 et externes ne sont pas plus décrits car ils peuvent être identiques à ceux de l'art antérieur.

Un procédé d'assemblage d'un mât d'aéronef comprend une première étape d'assemblage d'au moins un longeron supérieur ou inférieur 52, 54 et d'au moins un des premier et deuxième panneaux latéraux 60, 62 reliés par des éléments de fixation de manière à obtenir un sous-ensemble.

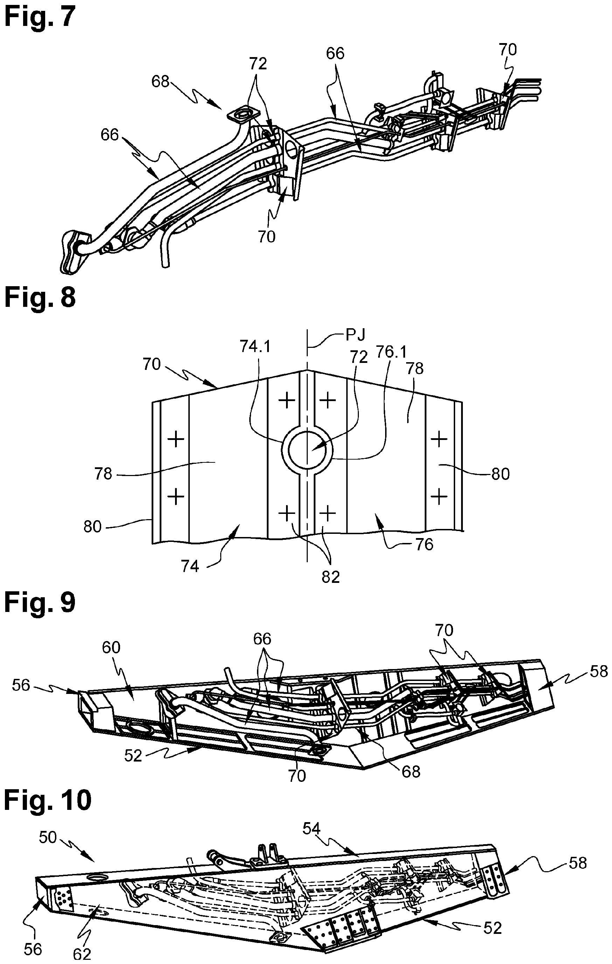

Selon un premier mode opératoire visible sur les figures 6 et 9, le longeron supérieur 52 et un premier panneau latéral 60 sont assemblés.

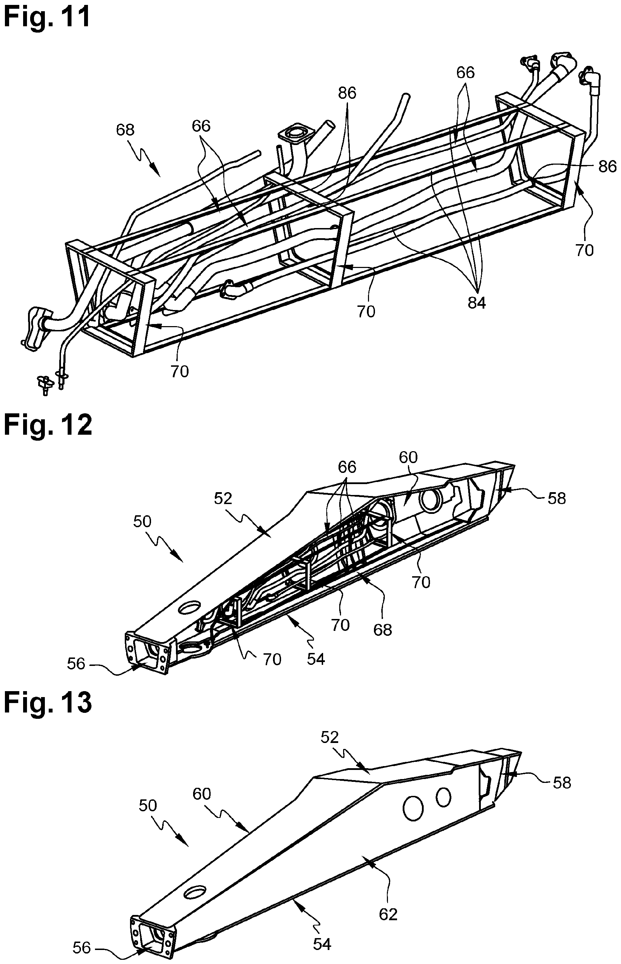

Selon un deuxième mode opératoire visible sur la figure 13, les longerons supérieur et inférieur 52, 54 ainsi qu'un premier panneau latéral 60 sont assemblés.

Selon une configuration, lors de cette première étape d'assemblage, les renforts avant et/ou arrière 56, 58 et éventuellement au moins un renfort intermédiaire 64 sont assemblés et reliés par des éléments de fixation à au moins un des longerons supérieur et inférieur 52, 54 ainsi qu'à au moins un des premier et deuxième panneaux latéraux 60, 62.

Quel que soit le mode opératoire, à l'issue de cette première étape d'assemblage au moins un premier ou deuxième panneau latéral 60, 62 ou au moins un longeron supérieur ou inférieur 52, 54 n'est pas assemblé rendant l'intérieur de la structure primaire 50 largement accessible et facilitant la mise en place des systèmes internes 66.

Selon un mode d'assemblage dit « hole to hole », les éléments du sous-ensemble parmi les longerons supérieur et inférieur 52, 54, les premier et deuxième panneaux latéraux 60, 62, les renforts avant, arrière et intermédiaire 56, 58, 64 sont pré-percés avant la première étape d'assemblage et ne sont pas contrepercés lors de cette première étape d'assemblage. Ainsi, lors de cette première étape d'assemblage, les éléments du sous-ensemble sont positionnés les uns par rapport aux autres de manière à faire coïncider des trous pour les éléments de fixation, puis ces derniers sont mis en place.

En parallèle de la première étape d'assemblage, le procédé d'assemblage du mât comprend une étape de montage d'un module de systèmes internes 68 comportant au moins un système interne 66 et au moins un support 70 auquel est relié le système interne 66. Un support 70 est un élément distinct de la structure primaire 20.

Selon un premier mode de réalisation visible sur les figures 7 et 9, le module de systèmes internes 68 comprend plusieurs supports 70 indépendants les uns des autres, décalés les uns par rapport aux autres selon la direction longitudinale.

Comme illustré en détails sur la figure 8, chaque support 70 est positionné dans un plan transversal et comprend au moins un trou de passage 72 traversé par un système interne 66. Selon une configuration, le système interne 66 traversant le trou de passage 72 est cylindrique au moins au droit du trou de passage. Dans ce cas, le trou de passage 72 est également cylindrique et comprend un diamètre sensiblement égal à celui du système interne 66 afin de l'immobiliser dans un plan transversal.

Selon un mode de réalisation, chaque support 70 comprend des première et deuxième parties 74, 76 jointives au niveau d'un plan de jonction PJ, les première et deuxième parties 74, 76 comportant, pour chaque trou de passage 72, des première et deuxième formes demi-cylindriques 74.1, 76.1 délimitant le trou de passage 72 lorsque les première et deuxième parties 74, 76 sont jointives au niveau du plan de jonction PJ. Selon une configuration, après l'assemblage du mât, la première partie 74 est reliée au premier panneau latéral 60 et la deuxième partie 76 est reliée au deuxième panneau latéral 62. Selon cette configuration, le plan de jonction PJ est parallèle aux premier et deuxième panneaux latéraux 60, 62 lorsque le support 70 est installé dans la structure primaire 50 et équidistant des premier et deuxième panneaux latéraux 60, 62.

Selon un mode de réalisation, chacune des première et deuxième parties 74, 76 de chaque support 70 est constituée de plusieurs éléments assemblés entre eux. Ainsi, chacune des première et deuxième parties 74, 76 comprend une plaque 78, une cornière 80 positionnée au niveau d'un premier côté de la plaque 78 configurée pour être reliée au premier ou deuxième panneau 60, 62, ainsi qu'un peigne 82 positionnée au niveau d'un deuxième côté de la plaque 78, à l'opposé du premier côté. Ce peigne 82 comporte une première aile reliée à la plaque 78 et une deuxième aile dans laquelle est conformée une forme demi-cylindrique 74.1, 76.1 pour chaque trou de passage 72. Les différents éléments de chacune des première et deuxième parties 74, 76 peuvent être métalliques. Selon une configuration, le peigne 82 est réalisé en matériau élastomère pour rendre la liaison entre le support 70 et le système interne 66 plus flexible. Cette configuration permet d'augmenter les tolérances de fabrication du support 70.

Selon un deuxième mode de réalisation visible sur les figures 11 et 12, le module de systèmes internes 68 comprend plusieurs supports 70, décalés les uns par rapport aux autres selon la direction longitudinale, reliés entre eux par des raidisseurs longitudinaux 84. Selon ce deuxième mode de réalisation, les supports 70 et les raidisseurs longitudinaux 84 forment une structure rigide.

Selon ce deuxième mode de réalisation, chaque support 70 se présente sous la forme d'un cadre. Les différents systèmes internes 66 sont reliés aux supports 70 et/ou aux raidisseurs longitudinaux 84 par des éléments de liaison 86 appropriés pour maintenir chacun des systèmes internes 66 immobiles par rapport aux supports 70 et aux raidisseurs longitudinaux 84.

Lorsque le module de systèmes internes 68 est achevé, le procédé d'assemblage du mât comprend une deuxième étape d'assemblage du module de systèmes internes 68 et du sous-ensemble assemblé lors de la première étape d'assemblage. Lors de cette deuxième étape d'assemblage, le module de systèmes internes 68 est positionné par rapport au sous-ensemble et relié grâce à des éléments de fixation à au moins un longeron supérieur ou inférieur 52, 54 et/ou au moins un premier ou deuxième panneau latéral 60, 62 du sous-ensemble assemblé lors de la première étape d'assemblage.

Quel que soit le mode de réalisation du module de systèmes internes 68, tous les systèmes internes 66 sont positionnés dans la structure primaire en une seule étape ce qui contribue à réduire notablement le temps d'assemblage du mât.

Chaque support 70 est relié à au moins un longeron supérieur ou inférieur 52, 54 et/ou au moins un premier ou deuxième panneau latéral 60, 62 du sous-ensemble assemblé lors de la première étape d'assemblage. Selon un mode d'assemblage dit « hole to hole », les supports 70 ainsi que les longerons supérieur et inférieur 52, 54 auxquels sont reliés les supports 70 sont pré-percés. Ainsi, chacun des supports 70 est positionné par rapport aux éléments du sous-ensemble assemblé lors de la première étape d'assemblage de manière à faire coïncider des trous pour les éléments de fixation, puis à mettre en place ces derniers.

Le procédé d'assemblage comprend une troisième étape d'assemblage visant à fermer la structure primaire 50 en assemblant, grâce à des éléments de fixation, les éléments parmi les longerons supérieur et inférieur 52, 54, les premier et deuxième panneaux latéraux 60, 62, les renforts avant, arrière et intermédiaire 56, 58, 64 non assemblés lors de la première étape d'assemblage. Selon le premier mode opératoire visible sur les figures 6, 9 et 10, le longeron inférieur 54 et le deuxième panneau latéral 62 sont reliés au longeron supérieur 52, au premier panneau latéral 60, aux renforts avant, arrière et intermédiaire 56, 58, 64 ainsi qu'aux supports 70 du module de systèmes internes 68.

Selon le deuxième mode opératoire visible sur les figures 12 et 13, le deuxième panneau latéral 62 est relié aux longerons supérieur et inférieur 52, 54, aux renforts avant, arrière et intermédiaire 56, 58, 64 ainsi qu'aux supports 70 du module de systèmes internes 68.

Selon un mode d'assemblage dit « hole to hole », les éléments assemblés lors de la troisième étape d'assemblage sont pré-percés et ne sont pas contrepercés lors de cette troisième étape d'assemblage. Ainsi, les éléments assemblés sont positionnés les uns par rapport aux autres de manière à faire coïncider des trous pour les éléments de fixation, puis ces derniers sont mis en place.

Les première, deuxième et troisième étapes du procédé d'assemblage du mât décrites ci-dessus sont réalisées dans cet ordre chronologique : la première étape, puis la deuxième étape et enfin la troisième étape.

Enfin, le procédé d'assemblage du mât comprend une étape de mise en place et de fixation des systèmes externes et de la structure secondaire.

A l'issue du procédé d'assemblage, le mât d'aéronef comprend une structure primaire 50 ainsi qu'un module de systèmes internes 68 comportant au moins un système interne 66 et au moins un support 70 auquel est relié le système interne 66, ledit module de systèmes internes 68 étant positionné à l'intérieur de la structure primaire 50, chaque support 70 du module de systèmes internes 68 étant relié à la structure primaire 50. Tous les systèmes internes (66) sont intégrés dans le même module de systèmes internes 68 et sont positionnés dans la structure primaire tous en même temps.

## Revendications

1. Procédé d'assemblage d'un mât d'aéronef comprenant une structure primaire (50) comportant des longerons supérieur et inférieur (52, 54) ainsi que des premier et deuxième panneaux latéraux (60, 62), une structure secondaire coiffant la structure primaire (50), au moins un système interne (66) positionné au moins partiellement à l'intérieur de la structure primaire (50) ainsi qu'au moins un système externe positionné entre la structure primaire (50) et la structure secondaire, le procédé d'assemblage comprenant:
- une première étape d'assemblage d'un sous-ensemble comportant au moins un des longerons supérieur et inférieur (52, 54) ainsi qu'au moins un des premier et deuxième panneaux latéraux (60, 62),
- une étape de montage d'un module de systèmes internes (68) comportant au moins un système interne (66) et au moins un support (70) auquel est relié le système interne (66), le au moins un ou chaque support (70) étant distinct de la structure primaire (50), le au moins un ou chaque support (70) comprenant des première et deuxième parties (74, 76) jointives au niveau d'un plan de jonction (PJ), chacune des première et deuxième parties (74, 76) du support (70) comprenant une plaque (78) et une cornière (80) positionnée au niveau d'un premier côté de la plaque (78),
- une deuxième étape d'assemblage du module de systèmes internes (68) et du sous-ensemble assemblé lors de la première étape d'assemblage, et lors de la deuxième étape d'assemblage, chaque support (70) du module de systèmes internes (68) étant relié à au moins un longeron supérieur ou inférieur (52, 54) et/ou au moins un premier ou deuxième panneau latéral (60, 62) du sous-ensemble assemblé lors de la première étape d'assemblage, et lors de la deuxième étape d'assemblage, la cornière (80) de chacune des première et deuxième parties (74, 76) du support (70) étant reliée au premier ou deuxième panneau latéral (60, 62),
- une troisième étape d'assemblage du (ou des) élément(s) de la structure primaire (50) non assemblé(s) lors de la première étape d'assemblage,
- une étape de mise en place et de fixation des systèmes externes et de la structure secondaire.

2. Procédé d'assemblage d'un mât d'aéronef selon la revendication précédente, **caractérisé en ce que** les longerons supérieur et inférieur (52, 54), les premier et deuxième panneaux latéraux (60, 62) ainsi que les supports (70) sont pré-percés avant d'être assemblés et **en ce que** lors des première, deuxième et troisième étapes d'assemblage, les longerons supérieur et inférieur (52, 54), les premier et deuxième panneaux latéraux (60, 62) et les supports (70) sont positionnés les uns par rapport aux autres de manière à faire coïncider des trous pour loger des éléments de fixation puis à mettre en place les éléments de fixation.

3. Procédé d'assemblage d'un mât d'aéronef selon l'une des revendications précédentes, **caractérisé en ce que** le module de systèmes internes (68) comprend plusieurs supports (70) indépendants les uns des autres.

4. Procédé d'assemblage d'un mât d'aéronef selon l'une des revendications 1 ou 2, **caractérisé en ce que** le module de systèmes internes (68) comprend plusieurs supports (70) reliés entre eux par des raidisseurs longitudinaux (84).

5. Procédé d'assemblage d'un mât selon la revendication précédente, **caractérisé en ce que** chaque support (70) se présente sous la forme d'un cadre, le module de systèmes internes (68) comprend plusieurs systèmes internes (66), et lors de l'étape de montage les systèmes internes (66) sont reliés aux supports (70) et/ou aux raidisseurs longitudinaux (84) par des éléments de liaison (86) de manière à maintenir les systèmes internes (66) immobiles par rapport aux supports (70) et aux raidisseurs longitudinaux (84).

6. Mât d'aéronef obtenu à partir du procédé d'assemblage selon l'une des revendications précédentes, le mât d'aéronef comprenant une structure primaire (50) ainsi qu'un module de systèmes internes (68) comportant au moins un système interne (66) et au moins un support (70) auquel est relié le système interne (66), le au moins un ou chaque support (70) étant distinct de la structure primaire (50), le au moins un ou chaque support (70) comprenant des première et deuxième parties (74, 76) jointives au niveau d'un plan de jonction (PJ), chacune des première et deuxième parties (74, 76) du support (70) comprenant une plaque (78) et une cornière (80) positionnée au niveau d'un premier côté de la plaque (78), ledit module de systèmes internes (68) étant positionné à l'intérieur de la structure primaire (50), chaque support (70) du module de systèmes internes (68) étant relié à la structure primaire (50), la cornière (80) de chacune des première et deuxième parties (74, 76) du support (70) étant reliée au premier ou deuxième panneau latéral (60, 62).

7. Mât d'aéronef selon la revendication précédente, **caractérisé en ce que** chaque support (70) comprend au moins un trou de passage (72) traversé par un système interne (66), les première et deuxième parties (74, 76) comportant, pour chaque trou de passage (72), des première et deuxième formes demi-cylindriques (74.1, 76.1) délimitant le trou de passage (72) lorsque les première et deuxième parties (74, 76) sont jointives.

8. Mât d'aéronef selon la revendication précédente, **caractérisé en ce que** le système interne (66) traversant le trou de passage (72) est cylindrique au moins au droit du trou de passage (72) et **en ce que** le trou de passage (72) est cylindrique et présente un diamètre sensiblement égal à celui du système interne (66).

9. Mât d'aéronef selon la revendication 7 ou 8, **caractérisé en ce que** chacune des première et deuxième parties du support (70) comprend un peigne (82) en matériau élastomère présentant une forme demi-cylindrique (74.1, 76.1) pour chaque trou de passage (72).

10. Mât d'aéronef selon l'une des revendications 6 à 9, **caractérisé en ce que** le module de systèmes internes (68) comprend plusieurs supports (70) indépendants les uns des autres.

11. Mât d'aéronef selon l'une des revendications 6 à 9, **caractérisé en ce que** le module de systèmes internes (68) comprend plusieurs supports (70) reliés entre eux par des raidisseurs longitudinaux (84).

12. Mât d'aéronef selon la revendication précédente, **caractérisé en ce que** chaque support (70) se présente sous la forme d'un cadre, le module de systèmes internes (68) comprend plusieurs systèmes internes (66), et les systèmes internes (66) sont reliés aux supports (70) et/ou aux raidisseurs longitudinaux (84) par des éléments de liaison (86) de manière à maintenir les systèmes internes (66) immobiles par rapport aux supports (70) et aux raidisseurs longitudinaux (84).

## Patentansprüche

1. Verfahren zum Zusammenbau eines Mastes eines Luftfahrzeugs mit einer Primärstruktur (50), die einen oberen und einen unteren Längsträger (52, 54) sowie eine erste und eine zweite Seitenplatte (60, 62) aufweist, mit einer die Primärstruktur (50) überdeckenden Sekundärstruktur, mit wenigstens einem inneren System (66), das zumindest teilweise im Inneren der Primärstruktur (50) angeordnet ist, sowie mit wenigstens einem äußeren System, das zwischen der Primärstruktur (50) und der Sekundärstruktur angeordnet ist, wobei das Verfahren zum Zusammenbau Folgendes umfasst:
- einen ersten Schritt des Zusammenbaus einer Unterbaugruppe, die wenigstens einen der oberen und unteren Längsträger (52, 54) sowie wenigstens eine der ersten und zweiten Seitenplatten (60, 62) umfasst,
- einen Schritt des Zusammenfügens eines Moduls aus inneren Systemen (68) mit wenigstens einem inneren System (66) und wenigstens einem Träger (70), mit dem das innere System (66) verbunden ist, wobei der wenigstens eine oder jeder Träger (70) von der Primärstruktur (50) verschieden ist, der wenigstens eine oder jeder Träger (70) erste und zweite Teile (74, 76) umfasst, die an einer Verbindungsebene (PJ) aneinanderstoßen, wobei jedes der ersten und zweiten Teile (74, 76) des Trägers (70) eine Platte (78) und einen Winkel (80) umfasst, der an einer ersten Seite der Platte (78) angeordnet ist,
- einen zweiten Schritt des Zusammenbaus des Moduls aus inneren Systemen (68) und der im ersten Schritt des Zusammenbaus zusammengebauten Unterbaugruppe, wobei im zweiten Schritt des Zusammenbaus jeder Träger (70) des Moduls aus inneren Systemen (68) mit wenigstens einem oberen oder unteren Längsträger (52, 54) und/oder wenigstens einer ersten oder zweiten Seitenplatte (60, 62) der im ersten Zusammenbauschritt zusammengebauten Unterbaugruppe verbunden wird, und wobei im zweiten Zusammenbauschritt der Winkel (80) jedes der ersten und zweiten Teile (74, 76) des Trägers (70) mit der ersten oder zweiten Seitenplatte (60, 62) verbunden wird,
- einen dritten Schritt des Zusammenbaus des (oder der) Elements (Elemente) der Primärstruktur (50), das (die) beim ersten Schritt des Zusammenbaus nicht zusammengefügt wurde(n),
- einen Schritt des Anbringens und Befestigens der Außensysteme und der Sekundärstruktur.

2. Verfahren zum Zusammenbau eines Mastes eines Luftfahrzeugs nach dem vorhergehenden Anspruch, **dadurch gekennzeichnet, dass** die oberen und unteren Längsträger (52, 54), die erste und zweite Seitenplatte (60, 62) sowie die Träger (70) vorgebohrt werden, bevor sie zusammengebaut werden, und dass beim ersten, zweiten und dritten Schritt des Zusammenbaus der obere und der untere Längsträger (52, 54), die erste und die zweite Seitenplatte (60, 62) sowie die Träger (70) relativ zueinander auf eine Art und Weise positioniert werden, bei der die Löcher zur Aufnahme von Befestigungselementen übereinander liegen und dann die Befestigungselemente eingesetzt werden.

3. Verfahren zum Zusammenbau eines Mastes eines Luftfahrzeugs nach einem der vorhergehenden Ansprüche, **dadurch gekennzeichnet, dass** das Modul aus inneren Systemen (68) mehrere voneinander unabhängige Träger (70) umfasst.

4. Verfahren zum Zusammenbau eines Mastes eines Luftfahrzeugs nach einem der Ansprüche 1 oder 2, **dadurch gekennzeichnet, dass** das Modul aus inneren Systemen (68) mehrere Träger (70) umfasst, die durch Längsaussteifungen (84) miteinander verbunden sind.

5. Verfahren zum Zusammenbau eines Mastes nach dem vorhergehenden Anspruch, **dadurch gekennzeichnet, dass** jeder Träger (70) in Form eines Rahmens vorliegt, das Modul aus inneren Systemen (68) mehrere innere Systeme (66) umfasst und dass beim Schritt des Zusammenfügens die inneren Systeme (66) mit den Trägern (70) und/oder mit den Längsversteifungen (84) durch Verbindungselemente (86) verbunden werden, um die inneren Systeme (66) in Bezug auf die Träger (70) und die Längsversteifungen (84) unbeweglich zu halten.

6. Mast eines Luftfahrzeugs, der aus dem Verfahren zum Zusammenbau nach einem der vorhergehenden Ansprüche erhalten wird, wobei der Mast des Luftfahrzeugs eine Primärstruktur (50) sowie ein Modul aus inneren Systemen (68) aufweist, das wenigstens ein inneres System (66) und wenigstens einen Träger (70) aufweist, mit dem das innere System (66) verbunden ist, wobei der wenigstens eine oder jeder Träger (70) von der Primärstruktur (50) getrennt ist, wobei der wenigstens eine oder jeder Träger (70) ein erstes und ein zweites Teil (74, 76) aufweist, die an einer Verbindungsebene (PJ) aneinanderstoßen, wobei jedes der ersten und zweiten Teile (74, 76) des Trägers (70) eine Platte (78) und einen Winkel (80) aufweist, der an einer ersten Seite der Platte (78) angeordnet ist, wobei das Modul aus inneren Systemen (68) innerhalb der Primärstruktur (50) angeordnet ist, wobei jeder Träger (70) des Moduls aus inneren Systemen (68) mit der Primärstruktur (50) verbunden ist, und wobei der Winkel (80) jedes der ersten und zweiten Teile (74, 76) des Trägers (70) mit der ersten oder zweiten Seitenplatte (60, 62) verbunden ist.

7. Mast eines Luftfahrzeugs nach dem vorhergehenden Anspruch, **dadurch gekennzeichnet, dass** jeder Träger (70) wenigstens ein Durchgangsloch (72) umfasst, durch das ein inneres System (66) verläuft, wobei das erste und das zweite Teil (74, 76) für jedes Durchgangsloch (72) eine erste und eine zweite halbzylindrische Form (74.1, 76.1) aufweisen, die das Durchgangsloch (72) begrenzen, wenn das erste und das zweite Teil (74, 76) aneinanderstoßen.

8. Mast eines Luftfahrzeugs nach dem vorhergehenden Anspruch, **dadurch gekennzeichnet, dass** das innere System (66), das durch das Durchgangsloch (72) verläuft, zumindest im Bereich des Durchgangslochs (72) zylindrisch ist und dass das Durchgangsloch (72) zylindrisch ist und einen Durchmesser aufweist, der im Wesentlichen gleich dem des inneren Systems (66) ist.

9. Mast eines Luftfahrzeugs nach Anspruch 7 oder 8, **dadurch gekennzeichnet, dass** jedes der ersten und zweiten Teile des Trägers (70) einen Kamm (82) aus elastomerem Material umfasst, der für jedes Durchgangsloch (72) eine halbzylindrische Form (74.1, 76.1) aufweist.

10. Mast eines Luftfahrzeugs nach einem der Ansprüche 6 bis 9, **dadurch gekennzeichnet, dass** das Modul aus inneren Systemen (68) mehrere voneinander unabhängige Träger (70) aufweist.

11. Mast eines Luftfahrzeugs nach einem der Ansprüche 6 bis 9, **dadurch gekennzeichnet, dass** das Modul aus inneren Systemen (68) mehrere Träger (70) aufweist, die durch Längsversteifungen (84) miteinander verbunden sind.

12. Mast eines Luftfahrzeugs nach dem vorhergehenden Anspruch, **dadurch gekennzeichnet, dass** jeder Träger (70) in Form eines Rahmens vorliegt, das Modul aus inneren Systemen (68) mehrere innere Systeme (66) aufweist und die inneren Systeme (66) mit den Trägern (70) und/oder den Längsversteifungen (84) über Verbindungselemente (86) verbunden sind, um die inneren Systeme (66) in Bezug auf die Träger (70) und die Längsversteifungen (84) unbeweglich zu halten.

## Claims

1. Method for assembling an aircraft pylon comprising a primary structure (50) comprising upper and lower spars (52, 54) and first and second lateral panels (60, 62), a secondary structure capping the primary structure (50), at least one internal system (66) positioned at least partially inside the primary structure (50) and at least one external system positioned between the primary structure (50) and the secondary structure, the assembly method comprising:
- a first step of assembling a subassembly comprising at least one of the upper and lower spars (52, 54) and at least one of the first and second lateral panels (60, 62),
- a step of mounting an internal systems module (68) comprising at least one internal system (66) and at least one support (70) to which the internal system (66) is connected, said at least one or each support (70) being distinct from the primary structure (50), said at least one or each support (70) comprising first and second parts (74, 76) that meet at a junction plane (PJ), each of the first and second parts (74, 76) of the support (70) comprising a plate (78) and a bracket (80) positioned at a first side of the plate (78),
- a second step of assembling the internal systems module (68) and the subassembly assembled in the first assembly step, and during the second assembly step, each support (70) for the internal systems module (68) being connected to at least one upper or lower spar (52, 54), and/or at least one first or second lateral panel (60, 62) of the subassembly assembled in the first assembly step, the bracket (80) of each first and second parts (74, 76) of the support (70) being connected to the first or second panel (60, 62),
- a third step of assembling those element(s) of the primary structure (50) not assembled in the first assembly step,
- a step of installing and securing the external systems and the secondary structure.

2. Method for assembling an aircraft pylon as claimed in the preceding claim, wherein the upper and lower spars (52, 54), the first and second lateral panels (60, 62) and the supports (70) are pre-drilled before being assembled, and wherein during the first, second and third assembly steps, the upper and lower spars (52, 54), the first and second lateral panels (60, 62) and the supports (70) are positioned relative to one another in such a way that holes line up in order to be able to receive fasteners, and then the fasteners are installed.

3. Method for assembling an aircraft pylon as claimed in one of the preceding claims, wherein the internal systems module (68) comprises multiple mutually independent supports (70).

4. Method for assembling an aircraft pylon as claimed in one of claims 1 and 2, wherein the internal systems module (68) comprises multiple supports (70) that are connected to one another by longitudinal stiffeners (84).

5. Method for assembling an aircraft pylon as claimed in the preceding claim, wherein each support (70) is in the form of a frame, the internal systems module (68) comprises multiple internal systems (66), and during the step of mounting the internal systems (66) are connected to the supports (70) and/or to the longitudinal stiffeners (84) by connectors (86) so as to keep the internal systems (66) from moving relative to the supports (70) and relative to the longitudinal stiffeners (84).

6. Aircraft pylon obtained by the assembly method as claimed in one of the preceding claims, wherein the aircraft pylon comprising a primary structure (50) and an internal systems module (68) comprising at least one internal system (66) and at least one support (70) to which the internal system (66) is connected, said at least one or each support (70) being distinct from the primary structure (50), said at least one or each support (70) comprising first and second parts (74, 76) that meet at a junction plane (PJ), each of the first and second parts (74, 76) of the support (70) comprising a plate (78) and a bracket (80) positioned at a first side of the plate (78), said internal systems module (68) being positioned inside the primary structure (50), each support (70) of the internal systems module (68) being connected to the primary structure (50), the bracket (80) of each first and second parts (74, 76) of the support (70) being connected to the first or second panel (60, 62).

7. Aircraft pylon as claimed in the preceding claim, wherein each support (70) comprises at least one through-hole (72) through which there passes an internal system (66), the first and second parts (74, 76) comprising, for each through-hole (72), first and second semicylindrical shapes (74.1, 76.1) delimiting the through-hole (72) when the first and second parts (74, 76) meet.

8. Aircraft pylon as claimed in the preceding claim, wherein the internal system (66) passing through the through-hole (72) is cylindrical at least in line with the through-hole (72), and wherein the through-hole (72) is cylindrical and has a diameter substantially equal to that of the internal system (66).

9. Aircraft pylon as claimed in claim 7 or 8, wherein each of the first and second parts of the support (70) comprises a comb (82) made of elastomeric material, having a semicylindrical shape (74.1, 76.1) for each through-hole (72).

10. Aircraft pylon as claimed in one of claims 6 and 9, wherein the internal systems module (68) comprises multiple mutually independent supports (70).

11. Aircraft pylon as claimed in one of claims 6 and 9, wherein the internal systems module (68) comprises multiple supports (70) that are connected to one another by longitudinal stiffeners (84).

12. Aircraft pylon as claimed in the preceding claim, wherein each support (70) is in the form of a frame, the internal systems module (68) comprises multiple internal systems (66), and the internal systems (66) are connected to the supports (70) and/or to the longitudinal stiffeners (84) by connectors (86) so as to keep the internal systems (66) from moving relative to the supports (70) and relative to the longitudinal stiffeners (84).
